# EUROPEAN PATENT APPLICATION

(11) **EP 4 644 857 A1**
(43) Date of publication of application: **05.11.2025**
(21) Application number: 25166800.0
(22) Date of filing: 27.03.2025
(51) Int. Cl.: G01M 3/00, G01M 3/38

(54) **SYSTEMS, APPARATUSES, METHODS, AND COMPUTER PROGRAM PRODUCTS FOR PERFORMING GAS ANALYSIS**

(30) Priority: 30.04.2024 US 202418650257
(71) Applicant: Rebellion Photonics, Inc., Houston, TX 77002 (US)
(72) Inventor: SHEN, Quan, Charlotte, 28202 (US); ARAUJO, Aaron Ariel, Charlotte, 28202 (US); AN, Lingling, Charlotte, 28202 (US)
(74) Representative: Houghton, Mark Phillip

(57) **Abstract**

Systems, apparatuses, methods, and computer program products for performing gas analysis are provided. An example gas analysis system may comprise at least one gas detection sensor and at least one controller component. In some embodiments, the controller component is configured to obtain first image data corresponding to a first target area of a plurality of target areas, perform a first gas leak analysis of the first target area of the plurality of target areas using the first image data, obtain second image data corresponding to a second target area of the plurality of target areas, and perform a second gas leak analysis of the second target area of the plurality of target areas using the second image data.

## Description

### FIELD

Embodiments of the present disclosure relate generally to systems, apparatuses, methods, and computer program products for performing gas analysis.

### BACKGROUND

Applicant has identified many technical challenges and difficulties associated with systems, apparatuses, methods, and computer program products for performing gas analysis. Through applied effort, ingenuity, and innovation, Applicant has solved problems related to systems, apparatuses, methods, and computer program products for performing gas analysis by developing solutions embodied in the present disclosure, which are described in detail below.

### BRIEF SUMMARY

Various embodiments described herein relate to systems, apparatuses, methods, and computer program products for performing gas analysis.

In accordance with one aspect of the disclosure, a gas analysis system is provided. In some embodiments, the gas analysis system may include at least one gas detection sensor. In some embodiments, the gas analysis system may include a controller component. In some embodiments, the controller component is configured to obtain first image data corresponding to a first target area of a plurality of target areas. In some embodiments, the controller component is configured to perform a first gas leak analysis of the first target area of the plurality of target areas using the first image data. In some embodiments, the controller component is configured to obtain second image data corresponding to a second target area of the plurality of target areas. In some embodiments, the controller component is configured to perform a second gas leak analysis of the second target area of the plurality of target areas using the second image data.

In some embodiments, performing the first gas leak analysis comprises the controller component being further configured to determine that the first image data is indicative of a gas leak alert.

In some embodiments, performing the first gas leak analysis further comprises the controller component being further configured to determine that the gas leak alert corresponds to an active gas leak based at least in part on active gas leak data.

In some embodiments, performing the first gas leak analysis further comprises the controller component being further configured to generate updated active gas leak data.

In some embodiments, generating updated active gas leak data comprises updating at least a portion of active gas leak data.

In some embodiments, performing the first gas leak analysis further comprises the controller component being further configured to determine that the gas leak alert is indicative of a new gas leak based at least in part on active gas leak data.

In some embodiments, performing the first gas leak analysis further comprises the controller component being further configured to generate new active gas leak data. In some embodiments, the new active gas leak data comprises a new gas leak initiation time indication.

In some embodiments, the controller component is configured to initiate performance of one or more responsive actions based at least in part on the determination that the gas leak alert is indicative of the new gas leak.

In some embodiments, performing the first gas leak analysis further comprises the controller component being further configured to identify a first active gas leak associated with the first target area based at least in part on active gas leak data. In some embodiments, performing the first gas leak analysis further comprises the controller component being further configured to determine that a non-leaking status value associated with the first active gas leak exceeds a non-leaking status threshold. In some embodiments, performing the first gas leak analysis further comprises the controller component being further configured to generate revised active gas leak data. In some embodiments, generating the revised active gas leak data comprises deleting at least a portion of active gas leak data.

In some embodiments, the controller component is configured to generate archived gas leak data. In some embodiments, the archived gas leak data comprises one or more of an archived gas leak conclusion time indication or an archived gas leak duration indication.

In some embodiments, the controller component is configured to initiate performance of one or more responsive actions based at least in part on the determination that the non-leaking status value associated with the first active gas leak exceeds the non-leaking status threshold.

In some embodiments, the controller component is configured to cause the at least one gas detection sensor to capture the second image data. In some embodiments, causing the at least one gas detection sensor to capture the second image data comprises the controller component being further configured to cause the at least one gas detection sensor to be moved from a first position associated with the first target area to a second position associated with the second target area.

In some embodiments, the first image data comprises hyperspectral image data of the first target area.

In accordance with one aspect of the disclosure, a method is provided. In some embodiments, the method may include obtaining first image data corresponding to a first target area of a plurality of target areas. In some embodiments, the method may include performing a first gas leak analysis of the first target area of the plurality of target areas using the first image data. In some embodiments, the method may include obtaining second image data corresponding to a second target area of the plurality of target areas. In some embodiments, the method may include performing a second gas leak analysis of the second target area of the plurality of target areas using the second image data.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for obtaining first image data corresponding to a first target area of a plurality of target areas. In some embodiments, the computer program code, in execution with at least one processor, configures the computer program product for performing a first gas leak analysis of the first target area of the plurality of target areas using the first image data. In some embodiments, the computer program code, in execution with at least one processor, configures the computer program product for obtaining second image data corresponding to a second target area of the plurality of target areas. In some embodiments, the computer program code, in execution with at least one processor, configures the computer program product for performing a second gas leak analysis of the second target area of the plurality of target areas using the second image data.

### BRIEF DESCRIPTION OF THE DRAWINGS

The description of the illustrative examples may be read in conjunction with the accompanying figures. It will be appreciated that, for simplicity and clarity of illustration, components and elements illustrated in the figures have not necessarily been drawn to scale, unless described otherwise. For example, the dimensions of some of the components or elements may be exaggerated relative to other elements, unless described otherwise. Examples incorporating teachings of the present disclosure are shown and described with respect to the figures presented herein, in which:
FIG. 1 illustrates an example schematic diagram depicting an environment in accordance with various examples of the present disclosure;
FIG. 2 illustrates a schematic diagram depicting an example system in accordance with various examples of the present disclosure;
FIG. 3 illustrates a perspective view of an example gas analysis system in accordance with various examples of the present disclosure;
FIG. 4 illustrates an example image in accordance various embodiments of the present disclosure;
FIG. 5 illustrates an example controller component of a gas analysis system in accordance with various embodiments of the present disclosure;
FIG. 6 illustrates a flowchart of an example method in accordance with one or more embodiments of the present disclosure;
FIG. 7 illustrates a flowchart of another example method in accordance with one or more embodiments of the present disclosure;
FIG. 8 illustrates a flowchart of another example method in accordance with one or more embodiments of the present disclosure; and
FIG. 9 illustrates a flowchart of another example method in accordance with one or more embodiments of the present disclosure.

### DETAILED DESCRIPTION OF THE INVENTION

Some examples of the present disclosure will now be described more fully hereinafter with reference to the accompanying drawings, in which some, but not all examples of the disclosure are shown. Indeed, these disclosures may be embodied in many different forms and should not be construed as limited to the examples set forth herein; rather, these examples are provided so that this disclosure will satisfy applicable legal requirements. Like numbers refer to like elements throughout.

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

### Overview

Example embodiments disclosed herein address technical problems associated with systems, apparatuses, methods, and computer program products for performing gas analysis. As would be understood by one skilled in the field to which this disclosure pertains, there are numerous example scenarios in which a user may use systems, apparatuses, methods, and computer program products for performing gas analysis.

In many applications, systems, apparatuses, methods, and computer program products for performing gas analysis are desirable. In some examples, it may be desirable to perform gas analysis for an asset, such as a processing plant. In some examples, it may be desirable to perform a gas analysis for multiple target areas (e.g., locations) of an asset. In some examples, it may be desirable to perform a gas analysis to quantify the amount of gas released by an asset due to one or more gas leaks associated with the asset. In this way, it may be possible to identify and remedy gas leaks at an asset as well as quantify the amount of gas leaked into an environment associated with the asset to ensure that the asset is adhering to its goals for reducing greenhouse gas emissions.

Example solutions for performing a gas analysis for an asset include using multiple stationary cameras focused on predetermined fixed points to monitor for gas leaks. As such, such example solutions are often costly and inefficient because a camera is needed to monitor for gas leaks at each predetermined fixed point. Also, such example solutions are unable to perform a gas analysis for gas leaks that occur at a point different from one of the predetermined fixed points monitored by stationary cameras. Additionally, such example solutions for performing a gas analysis for an asset do not contemplate quantifying an amount of gas leaked into the environment by a gas leak. As such, such example solutions are unable to determine whether an asset is adhering to its goals for reducing greenhouse gas emissions. Accordingly, there is a need for systems, apparatuses, methods, and computer program products for performing gas analysis that are able to monitor multiple target areas for gas leaks and determine the amount of gas leaked into an environment due to a gas leak in an efficient, reliable, and cost-effective manner.

Thus, to address these and/or other issues related performing a gas analysis, example systems, apparatuses, methods, and computer program products for performing a gas analysis are disclosed herein. For example, an embodiment in this disclosure, described in greater detail below, includes a gas analysis system that includes at least one gas detection sensor and a controller component. In some embodiments, the controller component may be configured to obtain first image data corresponding to a first target area of a plurality of target areas. In some embodiments, the controller component may be configured to perform a first gas leak analysis of the first target area of the plurality of target areas using the first image data. In some embodiments, the controller component may be configured to obtain second image data corresponding to a second target area of the plurality of target areas. In some embodiments, the controller component may be configured to perform a second gas leak analysis of the second target area of the plurality of target areas using the second image data. Accordingly, the systems, apparatuses, methods, and computer program products disclosed herein enable performance of a gas analysis for multiple target areas and for quantification of an amount of gas leaked due to a gas leak in an efficient, reliable, and cost-effective manner.

### Example Systems and Apparatuses

Embodiments of the present disclosure herein include systems, apparatuses, methods, and computer program products configured for performing gas analysis. It should be readily appreciated that the embodiments of the apparatus, systems, methods, and computer program product described herein may be configured in various additional and alternative manners in addition to those expressly described herein.

Various examples of the present disclosure may provide example technical improvements on the performance of gas analysis systems. Gas analysis systems may be configured to quantify, detect, measure, and/or identify a concentration level of one or more gaseous substances in a particular area or location. In particular, gas analysis systems may be utilized in environments where there is a high risk of gas leaks that may result in fires, explosions and/or acute toxic exposure such as an asset, components of an asset, and/or the like. One example of a gas analysis system is as a hyperspectral gas analysis system. An example hyperspectral gas analysis system may comprise one or more imaging sensors (e.g., cameras) that are configured to obtain and analyze raw image/video data (e.g., hyperspectral image data and visible image data) associated with one or more spectral bands (e.g., infrared, visible light) of the electromagnetic spectrum. In some examples, the hyperspectral gas analysis system may be configured to detect one or more gaseous substances including, but not limited to, acetic acid, Ammonia, Benzene, Butadiene, Butane, Ethane, Ethanol, Ethylene, Iso-Butylene, Iso-Pentane, Methane, Methanol, N-Pentane, Propane, Propylene, Toluene, Vinyl Chloride, p- or m-Xylene, and/or the like.

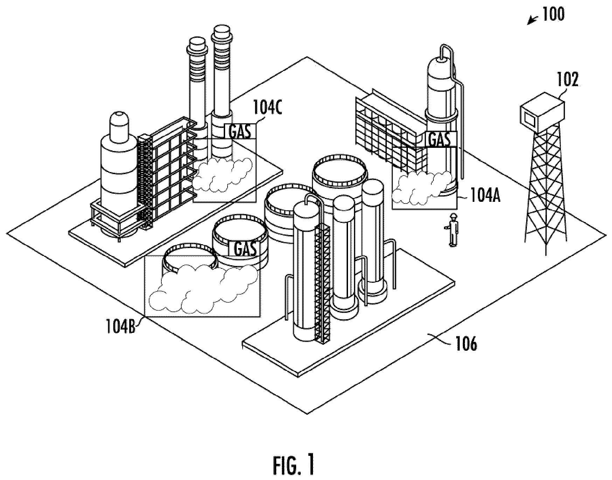

Referring now to FIG. 1, a schematic diagram depicting an environment 100 in accordance with various embodiments of the present disclosure is provided. In some embodiments, the environment 100 may include an asset 106. In some embodiments, for example, the asset 106 may be any type of plant associated with the environment 100. In this regard, the asset 106 may, for example, be a processing plant that receives and processes ingredients as inputs to create a processed product, such as a hydrocarbon processing plant, a refinery, a pulp and paper plant, a chemical plant, an alumina plant, a drilling facility, a fracking field, an oil drilling rig, an offshore platform, a gas sale station, a liquified natural gas vessel, a gas production facility, a gas transmission vehicle, a gas station, and/or the like. Additionally, or alternatively, for example, the asset 106 may include at least one building. In this regard, the asset 106 may, for example, be an industrial building, office building, building associated with a plant, and/or the like.

The asset 106 in some embodiments includes any number of individual components. The components of the asset 106 may perform a particular function during operation of the asset 106. For example, the components may include one or more well components, fracking components, crude processing components, hydrotreating components, isomerization components, vapor recovery components, fluid catalytic cracking components, hydrocracking components, aromatics reduction components, visbreaker components, storage tank components, blender components, pump components, flash venting components, compressor components, cooler components (e.g., air cooler components), sensor components, storage components, flare components, heating, ventilation, and air (HVAC) components, lighting components, and/or the like that perform a particular operation for transforming, storing, releasing, and/or otherwise handling one or more input ingredient(s) (e.g., hydrocarbons, gases, etc.). In this regard, for example, the individual components of a plant may include components associated with a particular process performed by the plant.

In some embodiments, the environment 100 may include a gas analysis system 102. In some embodiments, the gas analysis system 102 may be configured to monitor the environment 100 and/or the asset 106. In some embodiments, the gas analysis system 102 may be positioned within the asset 106 and/or in proximity of the asset 106. In some embodiments, at least a portion of the gas analysis system 102 is moveable with respect to a fixed location such that the gas analysis system 102 can move (e.g., rotate, pan, tilt, and/or the like) to facilitate monitoring of a plurality of target areas within the environment 100 and/or asset 106. As illustrated, the example gas analysis system 102 is configured to monitor at least first target area 104A, a second target area 104B, and a third target area 104C. In this regard, for example, at least a portion of the gas analysis system 102 may be moved (e.g., rotated, paned, titled, and/or the like) to different positions to capture image data. For example, at least a portion of the gas analysis system 102 may be moved (rotated, paned, titled, and/or the like) from a first position associated with the first target area 104A to a second position associated with the second target area 104B (e.g., at least a portion of the gas analysis system 102 may be rotated from the first position to the second position).

In various embodiments, the gas analysis system 102 is configured to generate a calibrated image/video stream using a particular light source (e.g., blackbody radiation, infrared radiation, and/or the like) in order to detect an absorption signature of one or more gaseous substances. For example, to detect an absorption signature of one or more gaseous substances in one or more of the plurality of target areas with the environment 100 and/or asset 106.

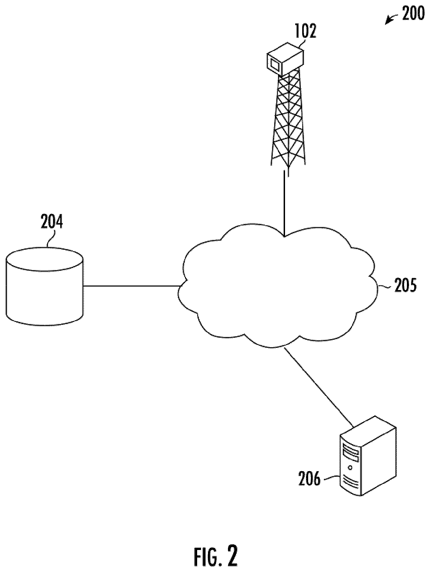

Referring now to FIG. 2, an example schematic diagram depicting an example system 200 in accordance various embodiments of the present disclosure is provided. As depicted, the example system 200 comprises the gas analysis system 102, one or more computing entities 206 (e.g., servers), one or more databases 204, one or more networks 205, and/or the like. In various examples, the system 200 may operate to facilitate monitoring of one or more gaseous substances within a particular location or environment.

In various embodiments, the gas analysis system 102 may be or comprise a hyperspectral gas analysis system that is configured to obtain image data (e.g., video streams) within a location (e.g., the environment 100). For example, the gas analysis system 102 may be configured to obtain first image data and/or second image data. In some examples, the gas analysis system 102 may capture image data at a rate of 15 images per second. As discussed above in connection to FIG. 1, the example gas analysis system 102 may be stationary (e.g., mounted on a platform, tower, support structure, and/or the like). In various embodiments, the gas analysis system 102, the one or more databases 204, and/or the one or more user computing entities 108 (e.g., servers) are in electronic communication with each other over the one or more networks 205 such that they can exchange data (e.g., receive and transmit data) with one another (e.g., periodically, and/or in response to requests). Each of the components of the system 200, including the gas analysis system 102, the one or more computing entities 206, and/or the one or more databases 204, may be in communication with one another over the same or different wireless or wired networks 205 including, for example, a wired or wireless Personal Area Network (PAN), Local Area Network (LAN), Metropolitan Area Network (MAN), Wide Area Network (WAN), cellular network, and/or the like. While FIG. 2 illustrates certain system components as separate, standalone devices, the various embodiments are not limited to this particular architecture.

As depicted in FIG. 2, the example system 200 comprises one or more computing entities 206. In general, the terms computing device, entity, device, system, and/or similar words used herein interchangeably may refer to, for example, one or more computers, computing devices, computing entities, desktop computers, mobile phones, tablets, phablets, notebooks, laptops, distributed systems, terminals, servers or server networks, blades, gateways, switches, processing devices, set-top boxes, relays, routers, network access points, base stations, the like, and/or any combination of devices adapted to perform the functions, operations, and/or processes described herein. Such functions, operations, and/or processes may include, for example, transmitting, receiving, operating on, processing, displaying, storing, determining, generating/creating, monitoring, evaluating, comparing, and/or similar terms used herein interchangeably. In one embodiment, these functions, operations, and/or processes can be performed on data, content, information, and/or similar terms used herein interchangeably.

In some examples, the computing entity 206 may also include one or more network and/or communications interfaces for communicating with various computing entities, such as by communicating data, content, information, and/or similar terms used herein interchangeably that can be transmitted, received, operated on, processed, displayed, stored, and/or the like.

In one embodiment, the computing entity 206 may further include or be in communication with non-volatile media (also referred to as non-volatile storage, memory, memory storage, memory circuitry and/or similar terms used herein interchangeably). In one embodiment, the non-volatile storage or memory may include one or more non-volatile storage or memory media as described above, such as hard disks, ROM, PROM, EPROM, EEPROM, flash memory, MMCs, SD memory cards, Memory Sticks, CBRAM, PRAM, FeRAM, RRAM, SONOS, racetrack memory, and/or the like. As will be recognized, the non-volatile storage or memory media may store databases, database instances, database management system entities, data, applications, programs, program modules, scripts, source code, object code, byte code, compiled code, interpreted code, machine code, executable instructions, and/or the like. The term database, database instance, database management system entity, and/or similar terms used herein interchangeably may refer to a structured collection of records or information/data that is stored in a computer-readable storage medium, such as via a relational database, hierarchical database, and/or network database.

In one embodiment, the computing entity 206 may further include or be in communication with volatile media (also referred to as volatile storage, memory, memory storage, memory circuitry and/or similar terms used herein interchangeably). In one embodiment, the volatile storage or memory may also include one or more volatile storage or memory media as described above, such as RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. As will be recognized, the volatile storage or memory media may be used to store at least portions of the databases, database instances, database management system entities, data, applications, programs, program modules, scripts, source code, object code, byte code, compiled code, interpreted code, machine code, executable instructions, and/or the like being executed by, for example, the processing element. Thus, the databases, database instances, database management system entities, data, applications, programs, program modules, scripts, source code, object code, byte code, compiled code, interpreted code, machine code, executable instructions, and/or the like may be used to control certain aspects of the operation of the computing entity 206 with the assistance of the processing element and the operating system.

As indicated, in one embodiment, the computing entity 206 may also include one or more network and/or communications interfaces for communicating with various computing entities, such as by communicating data, content, information, and/or similar terms used herein interchangeably that can be transmitted, received, operated on, processed, displayed, stored, and/or the like. Such communication may be executed using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. Similarly, computing entity 206 may be configured to communicate via wireless external communication networks using any of a variety of protocols, such as general packet radio service (GPRS), Universal Mobile Telecommunications System (UMTS), Code Division Multiple Access 200 (CDMA200), CDMA200 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra-wideband (UWB), IR protocols, NFC protocols, RFID protocols, IR protocols, ZigBee protocols, Z-Wave protocols, 6LoWPAN protocols, Wibree, Bluetooth protocols, wireless universal serial bus (USB) protocols, and/or any other wireless protocol. The computing entity 206 may use such protocols and standards to communicate using Border Gateway Protocol (BGP), Dynamic Host Configuration Protocol (DHCP), Domain Name System (DNS), File Transfer Protocol (FTP), Hypertext Transfer Protocol (HTTP), HTTP over TLS/SSL/Secure, Internet Message Access Protocol (IMAP), Network Time Protocol (NTP), Simple Mail Transfer Protocol (SMTP), Telnet, Transport Layer Security (TLS), Secure Sockets Layer (SSL), Internet Protocol (IP), Transmission Control Protocol (TCP), User Datagram Protocol (UDP), Datagram Congestion Control Protocol (DCCP), Stream Control Transmission Protocol (SCTP), HyperText Markup Language (HTML), and/or the like.

As will be appreciated, one or more of the computing entity's 206 components may be located remotely from other computing entity 206 components, such as in a distributed system. Furthermore, one or more of the components may be aggregated and additional components performing functions described herein may be included in the computing entity 206. Thus, the computing entity 206 can be adapted to accommodate a variety of needs and circumstances, such as including various components described with regard to a mobile application executing on a user computing entity, including various input/output interfaces.

As depicted in FIG. 2, any two or more of the illustrative components of the system 200 of FIG. 2 may be configured to communicate with one another via one or more networks 205. The networks 205 may include, but are not limited to, any one or a combination of different types of suitable communications networks such as, for example, cable networks, public networks (e.g., the Internet), private networks (e.g., frame-relay networks), wireless networks, cellular networks, telephone networks (e.g., a public switched telephone network), or any other suitable private and/or public networks. Further, the networks 205 may have any suitable communication range associated therewith and may include, for example, global networks (e.g., the Internet), MANs, WANs, LANs, or PANs. In addition, the networks 205 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, satellite communication mediums, or any combination thereof, as well as a variety of network devices and computing platforms provided by network providers or other entities.

While FIG. 2 provides an example system 200, it is noted that the scope of the present disclosure is not limited to the example shown in FIG. 2. In some examples, the system 200 may comprise one or more additional and/or alternative elements, and/or may be different from that illustrated in FIG. 2.

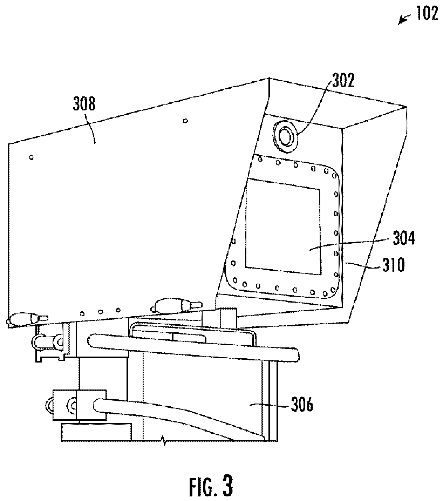

Referring now to FIG. 3, a perspective view of the gas analysis system 102 (e.g., hyperspectral gas analysis system) in accordance various embodiments of the present disclosure is provided. As depicted, the example gas analysis system 102 may comprise a housing 308 configured to contain one or more elements/components of the gas analysis system 102. For example, the housing 308 may include the controller component of the gas analysis system 102. As another example, the housing 308 may include, partially include, and/or partially cover, the at least one gas detection sensor 310 of the gas analysis system 102.

As depicted in FIG. 3, the at least one gas detection sensor 310 of the gas analysis system 102 may include at least one visible imaging sensor 302 (e.g., an RGB camera). Additionally, or alternatively, the at least one gas detection sensor 310 of the gas analysis system 102 may include at least one hyperspectral imaging sensor 304. In various embodiments, the gas analysis system 102 is configured to obtain, monitor, and/or capture image data (e.g., infrared image data, visible image data, combinations thereof, and/or the like) via the at least one gas detection sensor 310, such as via the at least one visible imaging sensor 302 and the at least one hyperspectral imaging sensor 304. For example, the gas analysis system 102 may be configured to obtain, monitor, and/or capture first image data and/or second image data via the at least one gas detection sensor 310, such as via the at least one visible imaging sensor 302 and the at least one hyperspectral imaging sensor 304. In various examples, the gas analysis system 102 is be configured to generate a calibrated image using a particular light source (e.g., blackbody radiation, infrared radiation, and/or the like) in order to detect an absorption signature of one or more gaseous substances.

As further depicted in FIG. 3, the gas analysis system 102 comprises a pan-tilt unit 306 that operates to enable movement (e.g., rotations, pans, tilts, and/or the like) of at least a portion of the gas analysis system 102 (e.g., in some examples, 360 degree rotations and/or up to a 45 degree tilt) to facilitate monitoring of more than one target area within a particular location. For example, the housing 308 and/or the at least one gas detection sensor 310 may be moved by the pan-tilt unit 306 to capture first image data from the first target area 104A and second image data from the second target area 104B (e.g., may be moved from a first position associated with the first target area 104A to a second position associated with the second target area 104B). In some embodiments, the example gas analysis system 102 may be mounted on a fixed/stationary support structure (e.g., tower, base, frame, interior building surface, and/or the like) within the environment 100 and/or the asset 106.

While FIG. 3 provides an example gas analysis system 102, it is noted that the scope of the present disclosure is not limited to the example shown in FIG. 3. In some examples, the gas analysis system 102 may comprise one or more additional and/or alternative elements, and/or may be different from that illustrated in FIG. 3. For example, the at least one gas detection sensor 310 may include one or more of an electrochemical sensing component, a catalytic sensing component, and/or a photoionization sensing component.

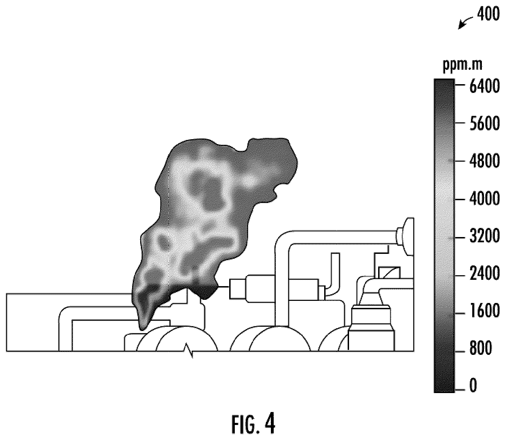

Referring now to FIG. 4, an image of example image data 400 in accordance with various embodiments of the present disclosure is provided. For example, the image data 400 may include a hyperspectral image. In some embodiments, the image data 400 may be an output of a gas analysis system, such as the gas analysis system 102 discussed above in connection with FIG. 3. As depicted in FIG. 4, the image data 400 depicts a gaseous plume (e.g., a color map) indicative of the presence and concentration (as depicted, in parts per million per meter (ppm*m)) of a gaseous substance.

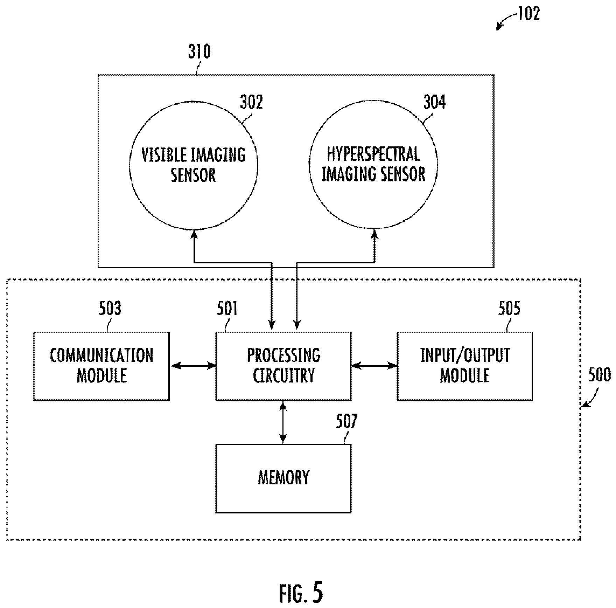

Referring now to FIG. 5, a schematic diagram depicting an example controller component 500 of the gas analysis system 102 in electronic communication with various other components in accordance with various embodiments of the present disclosure. As shown, the controller component 500 comprises processing circuitry 501, a communication module 503, input/output module 505, a memory 507, and/or other components configured to perform various operations, procedures, functions or the like described herein.

As shown, the controller component 500 (such as the processing circuitry 501, communication module 503, input/output module 505 and memory 507) is electrically coupled to and/or in electronic communication with at least the at least one gas detection sensor 310, the visible imaging sensor 302, and/or the hyperspectral imaging sensor 304. As depicted, the at least one gas detection sensor, the visible imaging sensor 302, and/or the hyperspectral imaging sensor 304 may exchange (e.g., transmit and receive) data with the processing circuitry 501 of the controller component 500.

The processing circuitry 501 may be implemented as, for example, various devices comprising one or a plurality of microprocessors with accompanying digital signal processors; one or a plurality of processors without accompanying digital signal processors; one or a plurality of coprocessors; one or a plurality of multi-core processors; one or a plurality of controllers; processing circuits; one or a plurality of computers; and various other processing elements (including integrated circuits, such as ASICs or FPGAs, or a certain combination thereof). In some embodiments, the processing circuitry 501 may comprise one or more processors. In one exemplary embodiment, the processing circuitry 501 is configured to execute instructions stored in the memory 507 or otherwise accessible by the processing circuitry 501. When executed by the processing circuitry 501, these instructions may enable the controller component 500 to execute one or a plurality of the functions as described herein. No matter whether it is configured by hardware, firmware/software methods, or a combination thereof, the processing circuitry 501 may comprise entities capable of executing operations according to the embodiments of the present invention when correspondingly configured. Therefore, for example, when the processing circuitry 501 is implemented as an ASIC, an FPGA, or the like, the processing circuitry 501 may comprise specially configured hardware for implementing one or a plurality of operations described herein. Alternatively, as another example, when the processing circuitry 501 is implemented as an actuator of instructions (such as those that may be stored in the memory 507), the instructions may specifically configure the processing circuitry 501 to execute one or a plurality of algorithms and operations described herein, such as those discussed with reference to FIG. 5.

The memory 507 may comprise, for example, a volatile memory, a non-volatile memory, or a certain combination thereof. Although illustrated as a single memory in FIG. 5, the memory 507 may comprise a plurality of memory components. In various embodiments, the memory 507 may comprise, for example, a hard disk drive, a random-access memory, a cache memory, a flash memory, a Compact Disc Read-Only Memory (CD-ROM), a Digital Versatile Disk Read-Only Memory (DVD-ROM), an optical disk, a circuit configured to store information, or a certain combination thereof. The memory 507 may be configured to store information, data, application programs, instructions, and etc., so that the controller component 500 can execute various functions according to the embodiments of the present disclosure. For example, in at least some embodiments, the memory 507 is configured to cache input data for processing by the processing circuitry 501. Additionally, or alternatively, in at least some embodiments, the memory 507 is configured to store program instructions for execution by the processing circuitry 501. The memory 507 may store information in the form of static and/or dynamic information. When the functions are executed, the stored information may be stored and/or used by the controller component 500.

The communication module 503 may be implemented as any apparatus included in a circuit, hardware, a computer program product or a combination thereof, which is configured to receive and/or transmit data from/to another component or apparatus. The computer program product comprises computer-readable program instructions stored on a computer-readable medium (for example, the memory 507) and executed by a controller component 500 (for example, the processing circuitry 501). In some embodiments, the communication module 503 (as with other components discussed herein) may be at least partially implemented as the processing circuitry 501 or otherwise controlled by the processing circuitry 501. In this regard, the communication module 503 may communicate with the processing circuitry 501, for example, through a bus. The communication module 503 may comprise, for example, antennas, transmitters, receivers, transceivers, network interface cards and/or supporting hardware and/or firmware/software and is used for establishing communication with another apparatus. The communication module 503 may be configured to receive and/or transmit any data that may be stored by the memory 507 by using any protocol that can be used for communication between apparatuses. The communication module 503 may additionally or alternatively communicate with the memory 507, the input/output module 505 and/or any other component of the controller component 500, for example, through a bus.

In some embodiments, the controller component 500 may comprise an input/output module 505. The input/output module 505 may communicate with the processing circuitry 501 to receive instructions input by the user and/or to provide audible, visual, mechanical or other outputs to the user. Therefore, the input/output module 505 may comprise supporting devices, such as a keyboard, a mouse, a display, a touch screen display, and/or other input/output mechanisms. Alternatively, at least some aspects of the input/output module 505 may be implemented on a device used by the user to communicate with the controller component 500. The input/output module 505 may communicate with the memory 507, the communication module 503 and/or any other component, for example, through a bus. One or a plurality of input/output modules and/or other components may be included in the controller component 500.

In some embodiments, the controller component 500 of the gas analysis system 102 may be configured to obtain image data. In some embodiments, image data may be one or more items of data indicative of and/or associated with images of a target area. In this regard, for example, the first image data may include one or more image frames of a target area. For example, image data may include first image data associated with the first target area 104A and/or second image data associated with the second target area 104B (e.g., a plurality of image frames associated with the first target area 104A and/or a second plurality of image frames associated with the second target area 104B). In some embodiments, image data may include hyperspectral image data. In some embodiments, hyperspectral image data may be image data that is associated with a plurality of bands across the electromagnetic spectrum (e.g., infrared, visible light spectrum, x-rays, ultraviolet, combinations thereof, and/or the like). Additionally, or alternatively, image data may include visible image data. In some embodiments, visible image data may be image data that is associated with the visible light bank of the electromagnetic spectrum.

In some embodiments, the controller component 500 may be configured to obtain image data from the at least one gas detection sensor 310. For example, the controller component 500 may be configured to obtain first image data of the first target area 104A from the at least one gas detection sensor 310. As another example, the controller component 500 may be configured to obtain second image data of the second target area 104B from the at least one gas detection sensor 310. In some embodiments, the controller component 500 may be configured to cause the at least one gas detection sensor 310 to capture image data (e.g., using the visible imaging sensor 302 and/or the hyperspectral imaging sensor 304).

In some embodiments, the controller component 500 may be configured to perform a gas leak analysis. In some embodiments, the controller component 500 may be configured to perform a gas leak analysis using image data (e.g., image data obtained from the at least one gas detection sensor 310). In some embodiments, the controller component 500 may be configured to perform a gas leak analysis of one or more of the plurality of target areas. For example, the controller component 500 may be configured to perform a first gas leak analysis of the first target area 104A using first image data. As another example, the controller component 500 may be configured to perform a second gas leak analysis of the second target area 104B using second image data.

In some embodiments, performing a gas leak analysis of a target area may include the controller component 500 being configured to determine that image data is indicative of a gas leak alert. In some embodiments, a gas leak alert may be one or more items of data indicative of a gas leak associated with the asset 106, a particular target area in the asset 106, the environment 100, and/or a particular target area in the environment 100. In some embodiments, performing a gas leak analysis of a target area may include the controller component 500 being configured to determine that image data associated with one of the plurality of target areas is indicative of a gas leak alert associated with the one of the plurality of target areas. For example, the controller component 500 may be configured to determine that first image data associated with the first target area 104A is indicative of a gas leak alert. In some embodiments, the controller component 500 may be configured to determine that image data associated with one of the plurality of target areas is indicative of a gas leak alert if a predetermined number of image frames in the image data are indicative of a gas leak (e.g., a gas plume). Said differently, the controller component 500 may be configured to determine that image data associated with a target area being monitored by the gas analysis system 102 is indicative of a gas leak alert. For example, the controller component 500 may be configured to determine that first image data associated with the first target area 104A is indicative of a gas leak alert when the gas analysis system 102 is monitoring the first target area 104A.

In some embodiments, the controller component 500 may be configured to determine and/or identify gas leak alert configuration data associated with a gas leak alert. In some embodiments, gas leak alert configuration data may include one or more items of data indicative of one or more characteristics associated with a gas leak alert. For example, gas leak alert configuration data may include one or more items of data indicative of a gas leak alert identifier configured to uniquely identify a gas leak alert. In this regard, the controller component 500 may be configured to determine and/or identify a gas leak alert identifier associated with a gas leak alert. As another example, gas leak alert configuration data may include one or more items of data indicative of a gas type identifier configured to identify a type of gas associated with a gas leak alert. In this regard, the controller component 500 may be configured to determine and/or identify a gas type identifier associated with a gas leak alert.

As another example, gas leak alert configuration data may include one or more items of data indicative of a sensor component identifier configured to identify a sensor component associated with a gas leak alert (e.g., the at least one gas detection sensor 310 that was used to identify a gas leak alert). In this regard, the controller component 500 may be configured to determine and/or identify sensor component identifier associated with a gas leak alert. As another example, gas leak alert configuration data may include one or more items of data indicative of a target area identifier configured to identify a target area of the plurality of target areas associated with a gas leak alert. In this regard, the controller component 500 may be configured to determine and/or identify a target area identifier associated with a gas leak alert. As another example, gas leak alert configuration data may include one or more items of data indicative of a gas leak alert time identifier configured to identify a time at which a gas leak alert was identified, determined, and/or generated. In this regard, the controller component 500 may be configured to determine and/or identify a gas leak alert time identifier associated with a gas leak alert.

In some embodiments, performing a gas leak analysis may include the controller component 500 being configured to determine that a gas leak alert corresponds to an active gas leak based at least in part on active gas leak data. In some embodiments, active gas leak data may be one or more items of data indicative of and/or associated with one or more gas leaks associated with the asset 106 and/or the environment 100 that is active (e.g., gas is continuing to leak) and has been previously detected (e.g., by the gas analysis system 102). Said differently, active gas leak data may indicate one or more gas leaks that have been previously detected (e.g., by the gas analysis system 102) and have not been resolved (e.g., a gas leak that has not been stopped).

In some embodiments, active gas leak data may include one or more indications for one or more active gas leaks in the active gas leak data. For example, active gas leak data may include gas leak alert indications for an active gas leak in the active gas leak data. In this regard, a gas leak alert indication may indicate a gas leak alert associated with an active gas leak (e.g., previous gas leak alerts associated with a gas leak). As another example, active gas leak data may include a gas type indication for an active gas leak in the active gas leak data. In this regard, a gas type indication may indicate one or more gas types associated with an active gas leak.

As another example, active gas leak data may include a sensor indication for an active gas leak in the active gas leak data. In this regard, a sensor indication may indicate one or more sensors used in identifying and/or monitoring an active gas leak. As another example, active gas leak data may include a target area indication for an active gas leak in the active gas leak data. In this regard, a target area indication may indicate a target area associated with an active gas leak. As another example, active gas leak data may include a gas leak initiation time indication for an active gas leak in the active gas leak data. In this regard, a gas leak initiation time indication may indicate the time at which an active gas leak started. In some embodiments, the time at which an active gas leak started may be determined as the time of the first gas leak alert that corresponds to the active gas leak (e.g., the time the first gas leak alert was identified). As another example, active gas leak data may include a gas leak duration indication for an active gas leak in the active gas leak data. In this regard, a gas leak duration indication may indicate the amount of time for which an active gas leak has been ongoing.

In some embodiments, the controller component 500 may be configured to determine that a gas leak alert corresponds to an active gas leak based at least in part on active gas leak data by comparing active gas leak data with gas leak alert configuration data for an identified gas leak alert and determining that the gas leak alert corresponds to an active gas leak in the active gas leak data. For example, the controller component 500 may compare a gas type identifier from the gas leak alert configuration data with a gas type indication from the active gas leak data to determine that a gas leak alert corresponds to an active gas leak. As another example, the controller component 500 may compare a sensor component identifier from the gas leak alert configuration data with a sensor indication from the active gas leak data to determine that a gas leak alert corresponds to an active gas leak. As another example, the controller component 500 may compare a target area identifier from the gas leak alert configuration data with a target area indication from the active gas leak data to determine that a gas leak alert corresponds to an active gas leak. Said differently, the controller component 500 may be configured to compare portions of active gas leak data with portions of gas leak alert configuration data to determine that a gas leak alert corresponds to a previously identified and ongoing gas leak (e.g., an active gas leak).

In some embodiments, performing a gas leak analysis includes the controller component 500 being configured to generate updated active gas leak data. In some embodiments, the controller component 500 may be configured to generate updated active gas leak data in response to the determination that a gas leak alert corresponds to an active gas leak. In some embodiments, generating updated active gas leak data may include updating at least a portion of the active gas leak data. For example, the controller component 500 may be configured to update a portion of the active gas leak data by updating a gas leak alert indication associated with the corresponding active gas leak to include a new gas leak alert. As another example, the controller component 500 may be configured to update a portion of the active gas leak data by updating a gas leak duration indication associated with the corresponding active gas leak to indicate that the active gas leak is still ongoing as of the gas leak alert.

**In** some embodiments, performing a gas leak analysis may include the controller component 500 being configured to determine that a gas leak alert is indicative of a new gas leak based at least in part on active gas leak data. In this regard, for example, the controller component 500 may compare active gas leak data with gas leak alert configuration data for an identified gas leak and determine that the gas leak alert does not correspond to any active gas leak in the active gas leak data. Said differently, the controller component 500 may be configured to determine that a gas leak alert is indicative of a new gas leak because the gas leak alert does not correspond to any of the active gas leaks in the active gas leak data.

**In** some embodiments, performing a gas leak analysis may include the controller component 500 being configured to generate new active gas leak data. In some embodiments, the controller component 500 may be configured to generate new active gas leak data in response to a determination that a gas leak alert is indicative of a new gas leak. In some embodiments, new active gas leak data may be one or more items of data indicative of and/or associated with one or more new gas leaks associated with the asset 106 and/or the environment 100 that is active (e.g., gas is continuing to leak). In this regard, for example, generating new active gas leak data may include generating one or more of a new gas leak alert indication, a new sensor indication, a new target area indication, a new gas leak initiation time indication, and/or a new gas leak duration indication for the new gas leak.

**In** some embodiments, the controller component 500 may be configured to initiate performance of one or more responsive actions. In some embodiments, the controller component 500 may be configured to initiate performance of one or more responsive actions based at least in part on the determination that a gas leak alert is indicative of a new gas leak. In this regard, for example, a responsive action may include triggering an alarm associated with the asset 106 and/or the environment 100 to alert that there is a new gas leak. As another example, a responsive action may include causing the asset 106 and/or a component of the asset 106 to cease one or more operations. For example, a responsive action may include causing a component of the asset 106 located in proximity to a new gas leak to cease operation (e.g., shut down).

**In** some embodiments, performing a gas leak analysis may include the controller component 500 being configured to identify an active gas leak. For example, the controller component 500 may be configured to identify a first active gas leak associated with the first target area 104A. In some embodiments, the controller component 500 may be configured to identify an active gas leak based at least in part on active gas leak data. In this regard, the controller component 500 may be configured to analyze image data to identify one or more active gas leaks in the active gas leak data. For example, if active gas leak data indicates that there is a first active gas leak in the first target area 104A, the controller component 500 may be configured to analyze first image data associated with the first target area 104A to identify the first active gas leak. Said differently, the controller component 500 may be configured to reference active gas leak data and analyze image data to identify active gas leaks in the active gas leak data.

In some embodiments, performing a gas leak analysis may include the controller component 500 being configured to determine a non-leaking status value associated with an active gas leak. For example, the controller component 500 may be configured to determine a non-leaking status value associated with an active gas leak previously identified by the controller component 500. In some embodiments, a non-leaking status value may represent an amount of time that a previously identified active gas leak is now associated with a non-leaking status. For example, the controller component 500 may be configured to determine a non-leaking status value of thirty seconds for a previously identified gas leak. Said differently, the controller component 500 may be configured to determine that a previously identified active gas leak is no longer leaking (e.g., is associated with a non-leaking status) and an amount of time that the previously identified active gas leak has been associated with a non-leaking status (e.g., a non-leaking status value).

In some embodiments, the controller component 500 may be configured to determine a non-leaking status value associated with an active gas leak based at least in part on image data associated with the active gas leak and/or active gas leak data. In this regard, for example, the controller component 500 may be configured to use image data to identify a previously identified active gas leak in the active gas leak data and, by analyzing the image data, determine that the active gas leak is no longer leaking and an amount of time that the active gas leak has no longer been leaking for. For example, the controller component 500 may be configured to use first image data to identify a first active gas leak listed in the active gas leak data and, by analyzing the first image data, determine that the first active gas leak is no longer leaking and that the first active gas leak has not been leaking for at least thirty seconds.

In some embodiments, performing a gas leak analysis may include the controller component 500 being configured to determine if a non-leaking status value associated with an active gas leak exceeds a non-leaking status threshold. In some embodiments, a non-leaking status threshold may be indicative of an amount of time that, if exceeded, indicates that a gas leak may be associated with a non-leaking status. In this regard for example, if an amount of time indicated by a non-leaking status value exceeds an amount of time indicated by a non-leaking status threshold, the controller component 500 may be configured to determine that the non-leaking status value exceeds the non-leaking status threshold. For example, if a non-leaking status value of a first active gas leak is thirty seconds and a non-leaking status threshold is twenty seconds, the controller component 500 may be configured to determine that the first active gas leaking exceeds the non-leaking status threshold.

In some embodiments, performing a gas leak analysis may include the controller component 500 being configured to generate revised active gas leak data. In some embodiments, the controller component 500 may be configured to generate revised active gas leak data in response to a determination that a non-leaking status value associated with an active gas leak exceeds a non-leaking status threshold. In some embodiments, generating revised active gas leak data may include deleting at least a portion of active gas leak data. In this regard, for example, generating revised active gas leak data may including deleting a portion of active gas leak data that corresponds to an active gas leak associated with a non-leaking status value that exceeds a non-leaking status threshold. Said differently, when the controller component 500 determines that an active gas leak is no longer leaking it may be configured to generate revised active gas leak data by deleting a portion of active gas leak data that corresponds to an active gas leak that is no longer leaking.

In some embodiments, the controller component 500 may be configured to generate archived gas leak data. In some embodiments, archived gas leak data may be one or more items of data indicative of and/or associated with one or more gas leaks associated with the asset 106 and/or the environment 100 that are no longer active (e.g., gas is no longer leaking). In some embodiments, the controller component 500 may be configured to generate archived gas leak data in response to a determination that a non-leaking status value associated with an active gas leak exceeds a non-leaking status threshold. Said differently, archived gas leak data may indicate one or more previously detected gas leaks (e.g., by the gas analysis system 102) that have been resolved (e.g., a gas leak that has been stopped).

In some embodiments, archived gas leak data may include one or more indications for each archived gas leak in the archived gas leak data. For example, archived gas leak data may include archived gas leak conclusion time indication for an archived gas leak in the archived gas leak data. In this regard, an archived gas leak conclusion time indication may indicate the time at which an archived gas leak concluded (e.g., the time when the controller component 500 determined that a non-leaking status value associated with an archived gas leak exceeded a non-leaking status threshold). As another example, archived gas leak data may include an archived gas leak duration indication for an archived gas leak in the archived gas leak data. In this regard, an archived gas leak duration indication may indicate an amount of time for which the archived gas leak occurred (e.g., how long the archived gas leak lasted).

In some embodiments, the controller component 500 may be configured to initiate performance of one or more responsive actions based at least in part on a determination that a non-leaking status value associated with an active gas leak exceeds the non-leaking status threshold. Said differently, the controller component 500 may be configured to initiate performance of one or more responsive actions when it has been determined that a gas leak is no longer active. In this regard, for example, a responsive action may include triggering an alarm associated with the asset 106 and/or the environment 100 to alert that a gas leak is no longer active. As another example, a responsive action may include causing the asset 106 and/or a component of the asset 106 to resume one or more operations. For example, a responsive action may include causing a component of the asset 106 located in proximity to a no longer active gas leak to resume operation.

### Example Methods

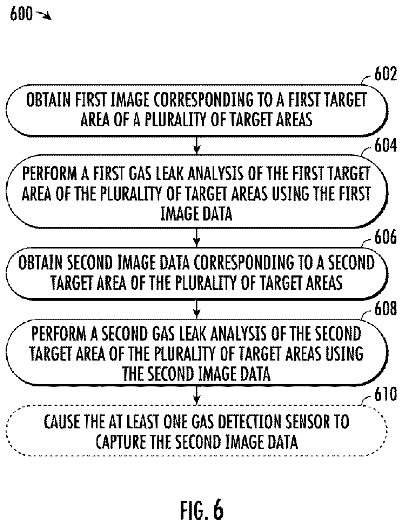

Referring now to FIG. 6, a flowchart diagram illustrating an example method 600 in accordance with various embodiments of the present disclosure is provided. In some examples, the method 600 may be performed by a processing circuitry (for example, but not limited to, an application-specific integrated circuit (ASIC), a central processing unit (CPU)). In some examples, the processing circuitry may be electrically coupled to and/or in electronic communication with other circuitries of the example apparatus, such as, but not limited to, a gas analysis system, the controller component of the gas analysis system, a memory (such as, for example, random access memory (RAM) for storing computer program instructions), and/or a display circuitry (for rendering readings on a display).

As shown in block 602, the method 600 may include obtaining first image data corresponding to a first target area of a plurality of target areas. As described above, in some embodiments, image data may be one or more items of data indicative of and/or associated with images of a target area. In this regard, for example, the first image data may include one or more image frames of a target area. For example, image data may include first image data associated with the first target area and/or second image data associated with the second target area (e.g., a plurality of image frames associated with the first target area and/or a second plurality of image frames associated with the second target area). In some embodiments, image data may include hyperspectral image data. In some embodiments, hyperspectral image data may be image data that is associated with a plurality of bands across the electromagnetic spectrum (e.g., infrared, visible light spectrum, x-rays, ultraviolet, combinations thereof, and/or the like). Additionally, or alternatively, image data may include visible image data. In some embodiments, visible image data may be image data that is associated with the visible light bank of the electromagnetic spectrum.

In some embodiments, the controller component may be configured to obtain image data from the at least one gas detection sensor. For example, the controller component may be configured to obtain first image data of the first target area from the at least one gas detection sensor. As another example, the controller component may be configured to obtain second image data of the second target area from the at least one gas detection sensor. In some embodiments, the controller component may be configured to cause the at least one gas detection sensor to capture image data (e.g., using the visible imaging sensor and/or the hyperspectral imaging sensor).

As shown in block 604, the method 600 may include performing a first gas leak analysis of the first target area of the plurality of target areas using the first image data. As described above, in some embodiments, the controller component may be configured to perform a gas leak analysis using image data (e.g., image data obtained from the at least one gas detection sensor). In some embodiments, the controller component may be configured to perform a gas leak analysis of one or more of the plurality of target areas. For example, the controller component may be configured to perform a first gas leak analysis of the first target area using first image data. As another example, the controller component may be configured to perform a second gas leak analysis of the second target area using second image data.

As shown in block 606, the method 600 may include obtaining second image data corresponding to a second target area of the plurality of target areas. As described above, in some embodiments, image data may be one or more items of data indicative of and/or associated with images of a target area. In this regard, for example, the first image data may include one or more image frames of a target area. For example, image data may include first image data associated with the first target area and/or second image data associated with the second target area (e.g., a plurality of image frames associated with the first target area and/or a second plurality of image frames associated with the second target area). In some embodiments, image data may include hyperspectral image data. In some embodiments, hyperspectral image data may be image data that is associated with a plurality of bands across the electromagnetic spectrum (e.g., infrared, visible light spectrum, x-rays, ultraviolet, combinations thereof, and/or the like). Additionally, or alternatively, image data may include visible image data. In some embodiments, visible image data may be image data that is associated with the visible light bank of the electromagnetic spectrum.

In some embodiments, the controller component may be configured to obtain image data from the at least one gas detection sensor. For example, the controller component may be configured to obtain first image data of the first target area from the at least one gas detection sensor. As another example, the controller component may be configured to obtain second image data of the second target area from the at least one gas detection sensor. In some embodiments, the controller component may be configured to cause the at least one gas detection sensor to capture image data (e.g., using the visible imaging sensor and/or the hyperspectral imaging sensor).

As shown in block 608, the method 600 may include performing a second gas leak analysis of the second target area of the plurality of target areas using the second image data. As described above, in some embodiments, the controller component may be configured to perform a gas leak analysis using image data (e.g., image data obtained from the at least one gas detection sensor). In some embodiments, the controller component may be configured to perform a gas leak analysis of one or more of the plurality of target areas. For example, the controller component may be configured to perform a first gas leak analysis of the first target area using first image data. As another example, the controller component may be configured to perform a second gas leak analysis of the second target area using second image data.

As shown in block 610, the method 600 may optionally include causing the at least one gas detection sensor to capture the second image data. As described above, in some embodiments, at least a portion of the gas analysis system is moveable with respect to a fixed location such that the gas analysis system can move (e.g., rotate, pan, tilt, and/or the like) to facilitate monitoring of a plurality of target areas within the environment and/or asset. As illustrated, the example gas analysis system is configured to monitor at least first target area, a second target area, and a third target area. In this regard, for example, at least a portion of the gas analysis system may be moved (e.g., rotated, paned, titled, and/or the like) to different positions to capture image data. For example, at least a portion of the gas analysis system may be moved (rotated, paned, titled, and/or the like) from a first position associated with the first target area to a second position associated with the second target area (e.g., at least a portion of the gas analysis system may be rotated from the first position to the second position).

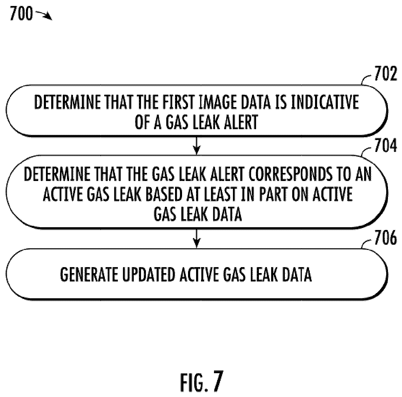

Referring now to FIG. 7, a flowchart diagram illustrating an example method 700 in accordance with various embodiments of the present disclosure is provided. In some embodiments, the method 700 may include one or more operations for performing a gas leak analysis in accordance with various embodiments of the present disclosure is provide. In some examples, the method 700 may be performed by a processing circuitry (for example, but not limited to, an application-specific integrated circuit (ASIC), a central processing unit (CPU)). In some examples, the processing circuitry may be electrically coupled to and/or in electronic communication with other circuitries of the example apparatus, such as, but not limited to, a gas analysis system, the controller component of the gas analysis system, a memory (such as, for example, random access memory (RAM) for storing computer program instructions), and/or a display circuitry (for rendering readings on a display).

As shown in block 702, the method 700 may include determining that the first image data is indicative of a gas leak alert. As described above, in some embodiments, a gas leak alert may be one or more items of data indicative of a gas leak associated with the asset, a particular target area in the asset, the environment, and/or a particular target area in the environment. In some embodiments, performing a gas leak analysis of a target area may include the controller component being configured to determine that image data associated with one of the plurality of target areas is indicative of a gas leak alert associated with the one of the plurality of target areas. For example, the controller component may be configured to determine that first image data associated with the first target area is indicative of a gas leak alert. In some embodiments, the controller component may be configured to determine that image data associated with one of the plurality of target areas is indicative of a gas leak alert if a predetermined number of image frames in the image data are indicative of a gas leak (e.g., a gas plume). Said differently, the controller component may be configured to determine that image data associated with a target area being monitored by the gas analysis system is indicative of a gas leak alert. For example, the controller component may be configured to determine that first image data associated with the first target area is indicative of a gas leak alert when the gas analysis system is monitoring the first target area.

As shown in block 704, the method 700 may include determining that the gas leak alert corresponds to an active gas leak based at least in part on active gas leak data. As described above, in some embodiments, active gas leak data may be one or more items of data indicative of and/or associated with one or more gas leaks associated with the asset and/or the environment that is active (e.g., gas is continuing to leak) and has been previously detected (e.g., by the gas analysis system). Said differently, active gas leak data may indicate one or more gas leaks that have been previously detected (e.g., by the gas analysis system) and have not been resolved (e.g., a gas leak that has not been stopped).

**In** some embodiments, active gas leak data may include one or more indications for one or more active gas leaks in the active gas leak data. For example, active gas leak data may include gas leak alert indications for an active gas leak in the active gas leak data. In this regard, a gas leak alert indication may indicate a gas leak alert associated with an active gas leak (e.g., previous gas leak alerts associated with a gas leak). As another example, active gas leak data may include a gas type indication for an active gas leak in the active gas leak data. In this regard, a gas type indication may indicate one or more gas types associated with an active gas leak.

As another example, active gas leak data may include a sensor indication for an active gas leak in the active gas leak data. In this regard, a sensor indication may indicate one or more sensors used in identifying and/or monitoring an active gas leak. As another example, active gas leak data may include a target area indication for an active gas leak in the active gas leak data. In this regard, a target area indication may indicate a target area associated with an active gas leak. As another example, active gas leak data may include a gas leak initiation time indication for an active gas leak in the active gas leak data. In this regard, a gas leak initiation time indication may indicate the time at which an active gas leak started. In some embodiments, the time at which an active gas leak started may be determined as the time of the first gas leak alert that corresponds to the active gas leak (e.g., the time the first gas leak alert was identified). As another example, active gas leak data may include a gas leak duration indication for an active gas leak in the active gas leak data. In this regard, a gas leak duration indication may indicate the amount of time for which an active gas leak has been ongoing.

In some embodiments, the controller component may be configured to determine that a gas leak alert corresponds to an active gas leak based at least in part on active gas leak data by comparing active gas leak data with gas leak alert configuration data for an identified gas leak alert and determining that the gas leak alert corresponds to an active gas leak in the active gas leak data. For example, the controller component may compare a gas type identifier from the gas leak alert configuration data with a gas type indication from the active gas leak data to determine that a gas leak alert corresponds to an active gas leak. As another example, the controller component may compare a sensor component identifier from the gas leak alert configuration data with a sensor indication from the active gas leak data to determine that a gas leak alert corresponds to an active gas leak. As another example, the controller component may compare a target area identifier from the gas leak alert configuration data with a target area indication from the active gas leak data to determine that a gas leak alert corresponds to an active gas leak. Said differently, the controller component may be configured to compare portions of active gas leak data with portions of gas leak alert configuration data to determine that a gas leak alert corresponds to a previously identified and ongoing gas leak (e.g., an active gas leak).

As shown in block 706, the method 700 may include generating updated active gas leak data. As described above, in some embodiments, the controller component may be configured to generate updated active gas leak data in response to the determination that a gas leak alert corresponds to an active gas leak. In some embodiments, generating updated active gas leak data may include updating at least a portion of the active gas leak data. For example, the controller component may be configured to update a portion of the active gas leak data by updating a gas leak alert indication associated with the corresponding active gas leak to include a new gas leak alert. As another example, the controller component may be configured to update a portion of the active gas leak data by updating a gas leak duration indication associated with the corresponding active gas leak to indicate that the active gas leak is still ongoing as of the gas leak alert.

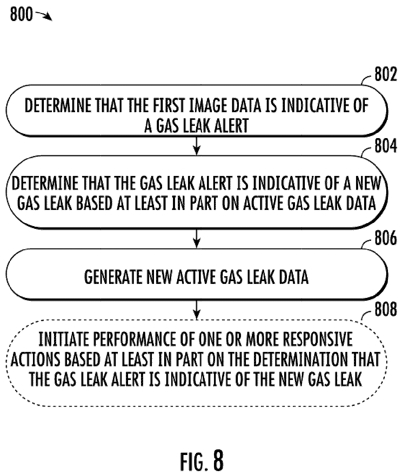

Referring now to FIG. 8, a flowchart diagram illustrating an example method 800 in accordance with various embodiments of the present disclosure is provided. In some embodiments, the method 800 may include one or more operations for performing a gas leak analysis in accordance with various embodiments of the present disclosure is provide. In some examples, the method 800 may be performed by a processing circuitry (for example, but not limited to, an application-specific integrated circuit (ASIC), a central processing unit (CPU)). In some examples, the processing circuitry may be electrically coupled to and/or in electronic communication with other circuitries of the example apparatus, such as, but not limited to, a gas analysis system, the controller component of the gas analysis system, a memory (such as, for example, random access memory (RAM) for storing computer program instructions), and/or a display circuitry (for rendering readings on a display).

As shown in block 802, the method 800 may include determining that the first image data is indicative of a gas leak alert. As described above, in some embodiments, a gas leak alert may be one or more items of data indicative of a gas leak associated with the asset, a particular target area in the asset, the environment, and/or a particular target area in the environment. In some embodiments, performing a gas leak analysis of a target area may include the controller component being configured to determine that image data associated with one of the plurality of target areas is indicative of a gas leak alert associated with the one of the plurality of target areas. For example, the controller component may be configured to determine that first image data associated with the first target area is indicative of a gas leak alert. In some embodiments, the controller component may be configured to determine that image data associated with one of the plurality of target areas is indicative of a gas leak alert if a predetermined number of image frames in the image data are indicative of a gas leak (e.g., a gas plume). Said differently, the controller component may be configured to determine that image data associated with a target area being monitored by the gas analysis system is indicative of a gas leak alert. For example, the controller component may be configured to determine that first image data associated with the first target area is indicative of a gas leak alert when the gas analysis system is monitoring the first target area.

As shown in block 804, the method 800 may include determining that the gas leak alert is indicative of a new gas leak based at least in part on active gas leak data. As described above, in some embodiments, the controller component may compare active gas leak data with gas leak alert configuration data for an identified gas leak and determine that the gas leak alert does not correspond to any active gas leak in the active gas leak data. Said differently, the controller component may be configured to determine that a gas leak alert is indicative of a new gas leak because the gas leak alert does not correspond to any of the active gas leaks in the active gas leak data.

As shown in block 806, the method 800 may include generating new active gas leak data. As described above, in some embodiments, the controller may be configured to generate new active gas leak data in response to a determination that a gas leak alert is indicative of a new gas leak. In some embodiments, new active gas leak data may be one or more items of data indicative of and/or associated with one or more new gas leaks associated with the asset and/or the environment that is active (e.g., gas is continuing to leak). In this regard, for example, generating new active gas leak data may include generating one or more of a new gas leak alert indication, a new sensor indication, a new target area indication, a new gas leak initiation time indication, and/or a new gas leak duration indication for the new gas leak.

As shown in block 808, the method 800 may optionally include initiating performance of one or more responsive actions based at least in part on the determination that the gas leak alert is indicative of the new gas leak. As described above, in some embodiments, the controller component may be configured to initiate performance of one or more responsive actions based at least in part on the determination that a gas leak alert is indicative of a new gas leak. In this regard, for example, a responsive action may include triggering an alarm associated with the asset and/or the environment to alert that there is a new gas leak. As another example, a responsive action may include causing the asset and/or a component of the asset to cease one or more operations. For example, a responsive action may include causing a component of the asset located in proximity to a new gas leak to cease operation (e.g., shut down).

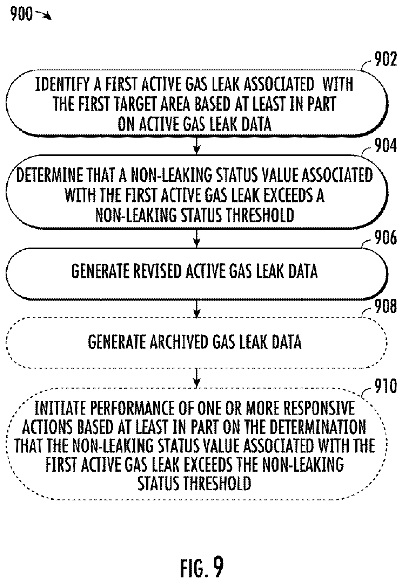

Referring now to FIG. 9, a flowchart diagram illustrating an example method 900 in accordance with various embodiments of the present disclosure is provided. In some embodiments, the method 900 may include one or more operations for performing a gas leak analysis in accordance with various embodiments of the present disclosure is provide. In some examples, the method 900 may be performed by a processing circuitry (for example, but not limited to, an application-specific integrated circuit (ASIC), a central processing unit (CPU)). In some examples, the processing circuitry may be electrically coupled to and/or in electronic communication with other circuitries of the example apparatus, such as, but not limited to, a gas analysis system, the controller component of the gas analysis system, a memory (such as, for example, random access memory (RAM) for storing computer program instructions), and/or a display circuitry (for rendering readings on a display).

As shown in block 902, the method 900 may include identifying a first active gas leak associated with the first target area based at least in part on active gas leak data. As described above, in some embodiments, initiate performance of one or more responsive actions based at least in part on the determination that the non-leaking status value associated with the first active gas leak exceeds the non-leaking status threshold.

As shown in block 904, the method 900 may include determining that a non-leaking status value associated with the first active gas leak exceeds a non-leaking status threshold. As described above, in some embodiments, the controller component may be configured to determine a non-leaking status value associated with an active gas leak previously identified by the controller component. In some embodiments, a non-leaking status value may represent an amount of time that a previously identified active gas leak is now associated with a non-leaking status. For example, the controller component may be configured to determine a non-leaking status value of thirty seconds for a previously identified gas leak. Said differently, the controller component may be configured to determine that a previously identified active gas leak is no longer leaking (e.g., is associated with a non-leaking status) and an amount of time that the previously identified active gas leak has been associated with a non-leaking status (e.g., a non-leaking status value).

In some embodiments, the controller component may be configured to determine a non-leaking status value associated with an active gas leak based at least in part on image data associated with the active gas leak and/or active gas leak data. In this regard, for example, the controller component may be configured to use image data to identify a previously identified active gas leak in the active gas leak data and, by analyzing the image data, determine that the active gas leak is no longer leaking and an amount of time that the active gas leak has no longer been leaking for. For example, the controller component may be configured to use first image data to identify a first active gas leak listed in the active gas leak data and, by analyzing the first image data, determine that the first active gas leak is no longer leaking and that the first active gas leak has not been leaking for at least thirty seconds.

In some embodiments, performing a gas leak analysis may include the controller component being configured to determine if a non-leaking status value associated with an active gas leak exceeds a non-leaking status threshold. In some embodiments, a non-leaking status threshold may be indicative of an amount of time that, if exceeded, indicates that a gas leak may be associated with a non-leaking status. In this regard for example, if an amount of time indicated by a non-leaking status value exceeds an amount of time indicated by a non-leaking status threshold, the controller component may be configured to determine that the non-leaking status value exceeds the non-leaking status threshold. For example, if a non-leaking status value of a first active gas leak is thirty seconds and a non-leaking status threshold is twenty seconds, the controller component may be configured to determine that the first active gas leaking exceeds the non-leaking status threshold.

As shown in block 906, the method 900 may include generating revised active gas leak data. As described above, in some embodiments, generating revised active gas leak data may include deleting at least a portion of active gas leak data. In this regard, for example, generating revised active gas leak data may including deleting a portion of active gas leak data that corresponds to an active gas leak associated with a non-leaking status value that exceeds a non-leaking status threshold. Said differently, when the controller component determines that an active gas leak is no longer leaking it may be configured to generate revised active gas leak data by deleting a portion of active gas leak data that corresponds to an active gas leak that is no longer leaking.

As shown in block 908, the method 900 may optionally include generating archived gas leak data. As described above, in some embodiments, archived gas leak data may be one or more items of data indicative of and/or associated with one or more gas leaks associated with the asset and/or the environment that are no longer active (e.g., gas is no longer leaking). In some embodiments, the controller component may be configured to generate archived gas leak data in response to a determination that a non-leaking status value associated with an active gas leak exceeds a non-leaking status threshold. Said differently, archived gas leak data may indicate one or more previously detected gas leaks (e.g., by the gas analysis system) that have been resolved (e.g., a gas leak that has been stopped).

In some embodiments, archived gas leak data may include one or more indications for each archived gas leak in the archived gas leak data. For example, archived gas leak data may include archived gas leak conclusion time indication for an archived gas leak in the archived gas leak data. In this regard, an archived gas leak conclusion time indication may indicate the time at which an archived gas leak concluded (e.g., the time when the controller component determined that a non-leaking status value associated with an archived gas leak exceeded a non-leaking status threshold). As another example, archived gas leak data may include an archived gas leak duration indication for an archived gas leak in the archived gas leak data. In this regard, an archived gas leak duration indication may indicate an amount of time for which the archived gas leak occurred (e.g., how long the archived gas leak lasted).

As shown in block 910, the method 900 may optionally include initiating performance of one or more responsive actions based at least in part on the determination that the non-leaking status value associated with the first active gas leak exceeds the non-leaking status threshold. As described above, in some embodiments, the controller component may be configured to initiate performance of one or more responsive actions when it has been determined that a gas leak is no longer active. In this regard, for example, a responsive action may include triggering an alarm associated with the asset and/or the environment to alert that a gas leak is no longer active. As another example, a responsive action may include causing the asset and/or a component of the asset to resume one or more operations. For example, a responsive action may include causing a component of the asset located in proximity to a no longer active gas leak to resume operation.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

While this specification contains many specific embodiment and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. A gas analysis system comprising:
at least one gas detection sensor; and
a controller component, wherein the controller component is configured to:
obtain first image data corresponding to a first target area of a plurality of target areas;
perform a first gas leak analysis of the first target area of the plurality of target areas using the first image data;
obtain second image data corresponding to a second target area of the plurality of target areas; and
perform a second gas leak analysis of the second target area of the plurality of target areas using the second image data.

2. The gas analysis system of claim 1, wherein performing the first gas leak analysis comprises the controller component being further configured to:
determine that the first image data is indicative of a gas leak alert.

3. The gas analysis system of claim 2, wherein performing the first gas leak analysis further comprises the controller component being further configured to:
determine that the gas leak alert corresponds to an active gas leak based at least in part on active gas leak data; and
generate updated active gas leak data, wherein generating updated active gas leak data comprises updating at least a portion of active gas leak data.

4. The gas analysis system of claim 2, wherein performing the first gas leak analysis further comprises the controller component being further configured to:
determine that the gas leak alert is indicative of a new gas leak based at least in part on active gas leak data; and
generate new active gas leak data, wherein the new active gas leak data comprises a new gas leak initiation time indication.

5. The gas analysis system of claim 4, wherein the controller component is further configured to:
initiate performance of one or more responsive actions based at least in part on the determination that the gas leak alert is indicative of the new gas leak.

6. The gas analysis system of claim 1, wherein performing the first gas leak analysis comprises the controller component being further configured to:
identify a first active gas leak associated with the first target area based at least in part on active gas leak data;
determine that a non-leaking status value associated with the first active gas leak exceeds a non-leaking status threshold; and
generate revised active gas leak data, wherein generating the revised active gas leak data comprises deleting at least a portion of active gas leak data.

7. The gas analysis system of claim 6, wherein the controller component is further configured to:
generate archived gas leak data, wherein the archived gas leak data comprises one or more of an archived gas leak conclusion time indication or an archived gas leak duration indication.

8. The gas analysis system of claim 6, wherein the controller component is further configured to:
initiate performance of one or more responsive actions based at least in part on the determination that the non-leaking status value associated with the first active gas leak exceeds the non-leaking status threshold.

9. The gas analysis system of claim 1, wherein the controller component is further configured to:
cause the at least one gas detection sensor to capture the second image data.

10. The gas analysis system of claim 9, wherein causing the at least one gas detection sensor to capture the second image data comprises the controller component being further configured to:
cause the at least one gas detection sensor to be moved from a first position associated with the first target area to a second position associated with the second target area.

11. The gas analysis system of claim 1, wherein the first image data comprises hyperspectral image data of the first target area.

12. A method comprising:
obtaining first image data corresponding to a first target area of a plurality of target areas;
performing a first gas leak analysis of the first target area of the plurality of target areas using the first image data;
obtaining second image data corresponding to a second target area of the plurality of target areas; and
performing a second gas leak analysis of the second target area of the plurality of target areas using the second image data.

13. The method of claim 12, wherein performing the first gas leak analysis comprises:
determining that the first image data is indicative of a gas leak alert.

14. The method of claim 13, wherein performing the first gas leak analysis further comprises:
determining that the gas leak alert corresponds to an active gas leak based at least in part on active gas leak data; and
generating updated active gas leak data, wherein generating updated active gas leak data comprises updating at least a portion of active gas leak data.

15. A computer program product comprising at least one non-transitory computer-readable storage medium having computer program code stored thereon that, in execution with at least one processor, configures the computer program product for:
obtaining first image data corresponding to a first target area of a plurality of target areas;
performing a first gas leak analysis of the first target area of the plurality of target areas using the first image data;
obtaining second image data corresponding to a second target area of the plurality of target areas; and
performing a second gas leak analysis of the second target area of the plurality of target areas using the second image data.
